(19) 

**Europäisches Patentamt**
**European Patent Office**
**Office européen des brevets**

(11) **EP 4 498 687 A1**

(12) **EUROPEAN PATENT APPLICATION**

(43) Date of publication:
**29.01.2025 Bulletin 2025/05**

(21) Application number: **24189852.7**

(22) Date of filing: **19.07.2024**

(51) International Patent Classification (IPC):
$H04N\ 23/71^{(2023.01)}$    $H04N\ 23/72^{(2023.01)}$
$H04N\ 23/75^{(2023.01)}$    $H04N\ 25/706^{(2023.01)}$
$H04N\ 23/73^{(2023.01)}$    $H04N\ 23/76^{(2023.01)}$
$H04N\ 25/63^{(2023.01)}$    $H04N\ 25/65^{(2023.01)}$
$H04N\ 25/771^{(2023.01)}$    $H04N\ 25/773^{(2023.01)}$

(52) Cooperative Patent Classification (CPC):
H04N 23/75; H04N 23/71; H04N 23/72;
H04N 23/73; H04N 23/76; H04N 25/773

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.07.2023 JP 2023122732**

(71) Applicant: **CANON KABUSHIKI KAISHA
Tokyo 146-8501 (JP)**

(72) Inventor: **KOBAYASHI, Takashi
Tokyo, 146-8501 (JP)**

(74) Representative: **Canon Europe Limited
European Intellectual Property Group
4 Roundwood Avenue
Stockley Park
Uxbridge UB11 1AF (GB)**

(54) **IMAGE CAPTURE APPARATUS, CONTROL METHOD, PROGRAM, AND STORAGE MEDIUM**

(57) Provided is an image capture apparatus including an image capture element (11) including an avalanche photodiode configured to photoelectrically convert an optical image, an image processing unit (12) configured to generate an image signal based on an output signal from the image capture element, a calculation unit (12, 14) configured to calculate a number of occurrences of avalanche amplification in the image capture element based on the image signal, a storage unit (16) configured to store a cumulative value of the number of occurrences which is calculated by the calculation unit; and control mean (14) configured to control a parameter related to exposure when it is determined that a brightness of an image based on the image signal is out of a predetermined range, in which the control unit is configured to decide the predetermined range based on the cumulative value stored in the storage unit.

FIG. 13

```
START
  │
  ▼
OBTAIN CUMULATIVE NUMBER OF
OCCURRENCES OF AVALANCHE        ─ S1300
AMPLIFICATION IN EACH AREA
  │
  ▼
CALCULATE DEGRADATION DEGREE    ─ S1301
  │
  ▼
UPDATE EXPOSURE RESPONSE COEFFICIENT   ─ S1302
  │
  ▼
UPDATE THRESHOLD θBv FOR APPROPRIATE   ─ S1303
EXPOSURE DETERMINATION
  │
  ▼
END
```

EP 4 498 687 A1

**Description**

BACKGROUND OF THE INVENTION

Field of the Invention

The present disclosure relates to an image capture apparatus, a control method, a program, and a storage medium.

Description of the Related Art

A single photon avalanche diode (SPAD) sensor (hereinafter, referred to as a SPAD sensor) has been proposed as a type of an image sensor. In the SPAD sensor, an avalanche amplification phenomenon is used in which an electron accelerates upon application of an intense electric field and collides with another electron to evoke a plurality of electrons, and an avalanche-like phenomenon is caused to generate a large current. According to this, a weak photon that has been input to a pixel can be converted into a large current and detected as an electric charge. Due to a mechanism of the SPAD sensor, since noise is not generated at the time of signal readout, the SPAD sensor is expected to be applied as the image sensor. In particular, since the SPAD sensor can shoot a subject clearly without being affected by noise even in a dark place, the SPAD sensor is expected to be widely used as the image sensor for monitoring use or the like.

When the monitoring use is considered, since the SPAD sensor is set in a fixed location to continue shooting action for a long period of time, exposure is preferably automatically adjusted according to a brightness of the subject. In addition, C. Zhang, "SPAD requirements from consumer electronics to automotive", Int. SPAD Sensor Workshop (2022) reports a phenomenon in which when a photoelectric conversion apparatus having an avalanche photo diode (APD) is driven for a long time, an amount of dark current changes.

SUMMARY OF THE INVENTION

The present invention in its first aspect provides an image capture apparatus as specified in claims 1 to 12.

The present invention in its second aspect provides a control method as specified in claim 13.

The present invention in its third aspect provides a program as specified in claim 14.

The present invention in its fourth aspect provides a storage medium as specified in claim 15.

Further features of the present invention will become apparent from the following description of embodiments with reference to the attached drawings.

BRIEF DESCRIPTION OF THE DRAWINGS

Fig. 1 a block diagram illustrating an internal configuration of an image capture apparatus.
Fig. 2 is an equivalent circuit diagram of a pixel constituting an image capture element.
Fig. 3 illustrates a flow of generating an image signal.
Fig. 4A is a graph representing a relationship between a pulse count number and a photon number, and Fig. 4B is a graph representing a relationship between the image signal and the pulse count number.
Fig. 5 is a flowchart of an auto exposure control function.
Fig. 6A illustrates an example of a sensed image, and Fig. 6B illustrates an example of a signal value of the sensed image.
Fig. 7A, Fig. 7B, and Fig. 7C illustrate examples of a weight table used for evaluating a brightness.
Fig. 8 illustrates an example of an auto exposure (AE) line chart.
Fig. 9 is a flowchart of calculating a cumulative count value.
Fig. 10 is a graph representing a relationship between the number of occurrences of avalanche amplification and an amount of noise generated per unit area.
Fig. 11 illustrates examples of an image brightness change in exposure control based on an aperture or an exposure time.
Fig. 12 illustrates examples of an image brightness change in exposure control based on a digital gain.
Fig. 13 is a flowchart of updating an exposure parameter based on the number of occurrences of avalanche amplification by area.
Fig. 14 illustrates an example of a cumulative count value by area.
Fig. 15 illustrates a relationship between the cumulative count value by area and an exposure response coefficient.
Fig. 16 illustrates a relationship between the cumulative count value by area and a threshold for an appropriate exposure determination.

DESCRIPTION OF THE EMBODIMENTS

Hereinafter, embodiments for carrying out the present invention will be described in detail with reference to the drawings. The embodiments described below are examples of a device configured to realize the present invention. The embodiments are to be appropriately modified or changed according to apparatus configurations to which the present invention is applied and various conditions, and the present invention is not to be limited to the following examples.

First Embodiment

Apparatus Configuration

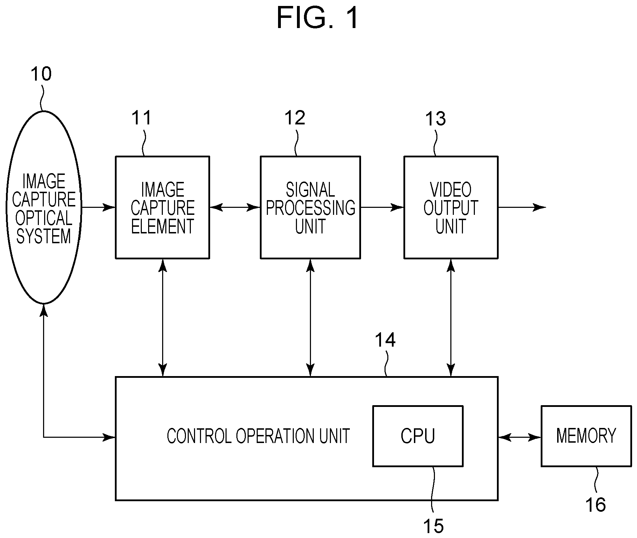

Fig. 1 is a block diagram illustrating a configuration of an image capture apparatus according to the present embodiment. An image capture optical system 10 includes a zoom lens, a focus lens, an image stabilizing lens, an aperture, a neutral density (ND) filter, and the like. Each unit constituting the image capture optical system 10 is controlled to decide an angle of image, focus, zoom, an exposure amount, and the like when a subject is to be captured. The image capture optical system 10 forms an optical image of the subject onto an image capture element 11.

The image capture element 11 is an image capture element configured to perform photoelectric conversion for converting an optical image formed in each of pixels on an image sensing surface into an electric signal. Each of the pixels constituting the image capture element 11 is an avalanche photodiode configured to photoelectrically convert the optical image, and functions as a SPAD sensor configured to count the number of photons which form the optical image. An output signal from the image capture element 11 is output to a signal processing unit 12 to be applied with various types of image processing by the signal processing unit 12.

The signal processing unit 12 is an image processing unit configured to generate an image (image signal) based on the output signal from the image capture element 11. The signal processing unit 12 is an image processing engine configured to execute correction processing such as removal of fixed pattern noise included in the output signal from the image capture element 11, brightness correction based on a digital gain, demosaicing processing, contour enhancement processing, and gamma processing. The signal processing unit 12 is not used for only the above-described correction processing. Recognition processing of detecting a subject area from the image (image signal) to control the image capture optical system 10 is also carried out by the signal processing unit 12. Furthermore, generation of an evaluation value for exposure control or white balance (WB) correction is also carried out by the signal processing unit 12, and the generated evaluation value is transmitted to a control operation unit 14. Specific processing content inside the image capture element 11 and the signal processing unit 12 will be described in detail below. The image that has been subjected to the correction processing by the signal processing unit 12 is transmitted to a video output unit 13.

The video output unit 13 outputs the image that has been subjected to the correction processing to an external device outside a camera which is connected via an output terminal. The video output unit 13 receives an image size and a video frame rate at which the external device can receive the image, and outputs an image synchronization signal together with the output image.

Herein, any terminal may be used as the output terminal as long as a video signal can be exchanged with the external device. A serial digital interface (SDI), a high-definition multimedia interface (HDMI) (registered trademark), and a universal serial bus (USB), and further a terminal such as a registered jack (RJ)-45 may be used. Moreover, a terminal compliant with a unique standard with which the video signal can be exchanged with a particular external device may be used.

The control operation unit 14 generates control information to be transmitted to the image capture optical system 10, the image capture element 11, the signal processing unit 12, and the video output unit 13. The control operation unit 14 includes a central processing unit (CPU) 15, and when the CPU 15 executes a control processing stored in a memory 16 or an auxiliary storage device which is not illustrated in the drawing, the control information is generated.

The memory 16 is an area for storing data used to perform an operation of the control information. Data in a middle of the operation or an operation result is stored in the memory 16, and the CPU 15 carries out the operation in the control operation unit 14 while appropriately referring to the memory 16. The image signal generated by the signal processing unit 12 may be stored in the memory 16 through the control operation unit 14. Herein, the memory 16 is illustrated as a block diagram inside the camera, but may have a configuration of a storage device which can be mounted to and removed from the inside of the camera.

Configuration of Image Capture Element

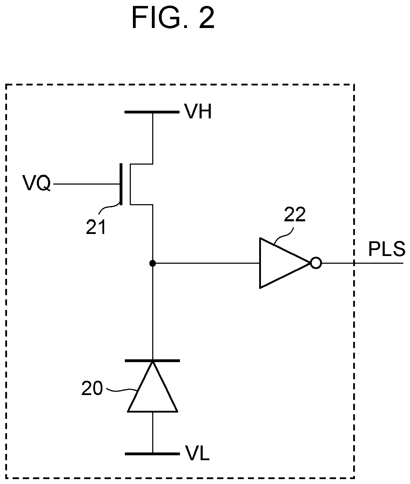

Next, pixels of the SPAD sensor in the image capture element 11 will be described with reference to an equivalent circuit diagram of a pixel in Fig. 2. Each of the pixels is constituted by a photodiode 20, a quench resistance 21, and a buffer 22, and the photodiode 20 mentioned herein is an SPAD. Upon application of a reverse voltage exceeding a breakdown voltage, the photodiode 20 operates in a Geiger mode by treating an entry of a photon as a trigger. For this reason, a reverse bias voltage equal to or higher than a breakdown voltage of a voltage VH applied to the SPAD is to be used. When a photon is input to the photodiode 20, an avalanche current is generated. A quench voltage VQ applied to the quench resistance 21 is set to be variable, and end of the avalanche amplification can be controlled when the reverse bias voltage is decreased based on a quench resistance value against the avalanche current generated in the photodiode 20. Herein, as a specific configuration of the quench resistance 21, a metal oxide silicon field effect transistor (MOSFET) may be used, or other semiconductor elements having the quench function may also be used. A threshold voltage is set in the buffer 22, and the buffer 22 is responsible to a shaping function of a waveform to output an H level for a specific period of time due to a fluctuation of an input voltage. For a signal shaped by the buffer 22 in this manner, a pulse waveform is output as a signal. For this pulse signal, the number of pulse waveforms is counted by a counter circuit prepared in a subsequent stage, and the number of pulses within the specific period of time is output as a signal value of the pixel. Herein, the description has been provided based on a simple configuration including the photodiode 20, the quench resistance 21, and the buffer 22 as the circuit configuration of each of the pixels in the SPAD sensor, but a pixel having other circuit elements or semiconductors may also be used as the circuit configuration of the pixel.

Conversion from Output Signal to Image Signal

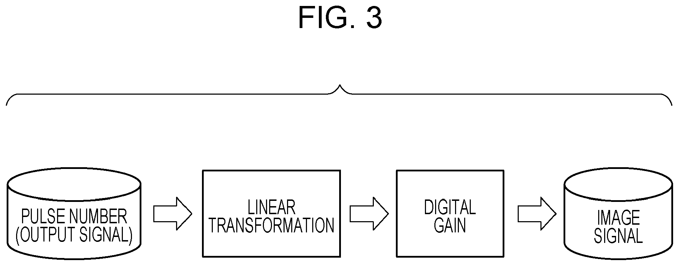

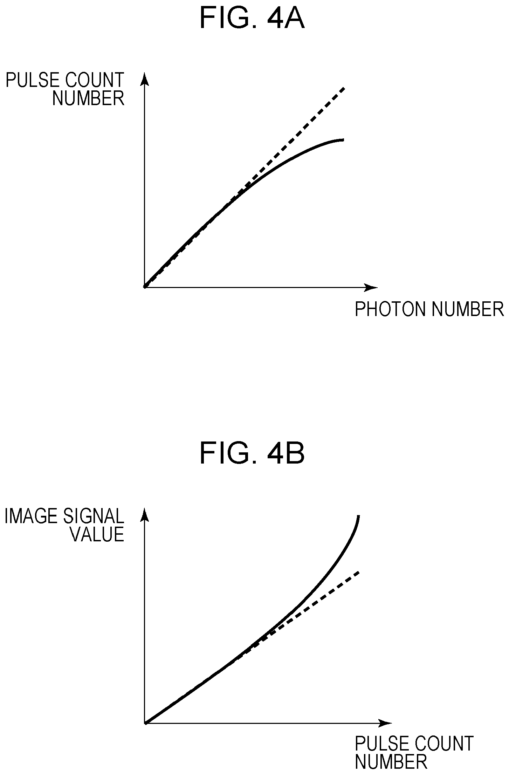

Next, a flow in which the output signal of the pixel is processed as an image signal will be described with reference to Fig. 3. First, a pulse number (corresponding to the number of occurrences of avalanche amplification) counted for each of the pixels is output as an output signal of each pixel. It is noted however that since there is a limit to a time resolution of counting of photons in the SPAD sensor, when a photon number is very high in unit time, photons may be counted without separating one from another. As a result, a correlational relationship between the pulse number and the photon number has a non-linear characteristic as illustrated in Fig. 4A. Herein, the non-linear characteristic is represented as a probability function of the pulse number. There is a non-linear correlation between the photon number and the pulse number, and a linear photon number can be calculated when the observed pulse number is transformed by an inverse function of the non-linear characteristic. Fig. 4B illustrates an inverse conversion characteristic with which the pulse number can be converted into the photon number. Therefore, when the signal processing unit 12 converts the pulse number (output signal) by using an inverse characteristic of the probability function, it is possible to obtain an image signal which is linear to the photon number. Next, as one device configured to control the exposure, a brightness of an image is adjusted by applying an amplification based on a digital gain to the image signal. According to this, it is possible to obtain the image signal which changes linearly to the photon number and further which is maintained to an appropriate brightness. In Fig. 3, the linear transformation and the digital gain have been mentioned as the processes applied to the pulse number for each pixel, but a process other than these may also be included. For example, the process may include fixed pattern noise (FPN) correction for detecting and correcting a defect pixel, shading correction for correcting non-uniformity of a black level within a plane, optical correction for correcting a degradation due to a characteristic of an optical lens, and the like. Furthermore, the process may include a white balance process for adjusting a white balance (WB) of the image, a contour enhancement process, and a noise reduction process. The above-described image processing may be performed by the signal processing unit 12, and some processing may be carried out in the image capture element 11.

Auto Exposure Control Function

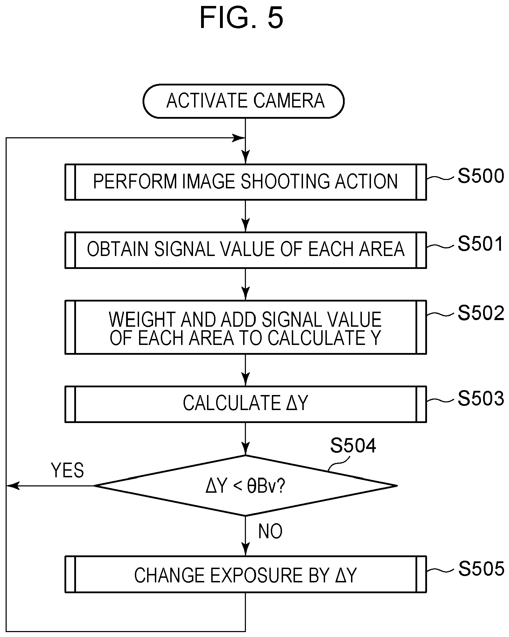

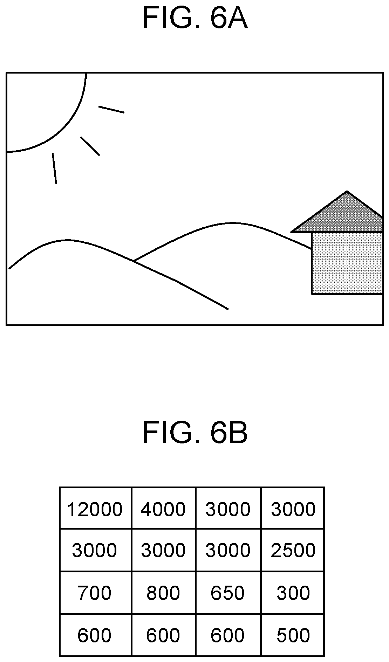

Next, an auto exposure control function in the control operation unit 14 will be described with reference to a flowchart of Fig. 5. First, an image is sensed in the image capture element 11 (S500). The sensed image (output signal) is transmitted to the signal processing unit 12 to be applied with various types of image processing by the signal processing unit 12. Fig. 6A illustrates an example of an image that has been subjected to the signal processing. A mountain forest, a backlit building, a sky, and the sun are sensed in the image. The sun has a very high signal value of the image signal, and then the signal value of the image signal decreases further in the stated order of the sky, the mountain forest, and the backlit building. At this time, the control operation unit 14 divides the image into a plurality of areas and obtains the signal value for each of the areas to evaluate a brightness. The image is divided in a horizontal direction into four and divided in a vertical direction into four, and Fig. 6B illustrates an area-by-area signal value of the image signal. Herein, the signal value obtained from an image area in which the sun is reflected is very high, and the signal value obtained from an image area in which the backlit building is reflected is low. The signal value mentioned herein may be obtained for each color of a Bayer image, or may also be obtained for each color or each luminance of a YCC or YUV image. The number of divisions for the signal value by area does not necessarily need to be 4 × 4, and the signal value may be obtained in 8 × 8 or 16 × 16 areas. Herein, an example has been illustrated in which an average value of the signal values of the image signals by area is obtained, but the signal value may also be obtained as a sum total of the signal values in the areas. In this manner, the signal value is obtained by area in the image (S501).

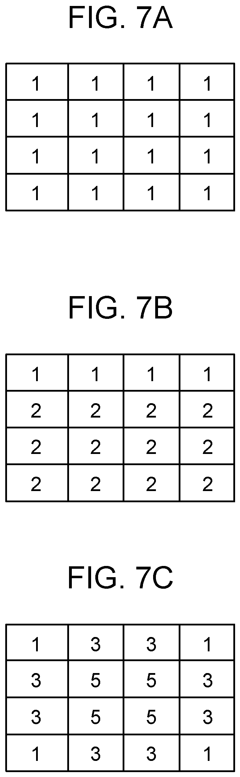

Next, the signal value obtained by area is weighted to evaluate a brightness Y of the subject (S502). Figs. 7A to 7C illustrate examples of a weight table used when each area is weighted to evaluate the brightness. Fig. 7A illustrates a weight table used when the brightness is evaluated at the same ratio with regard to all the areas without changing the weight for each area. On the other hand, Fig. 7B illustrates a weight table used when the brightness is evaluated by taking into account a tendency that a high luminance subject such as the sun is reflected in an upper part of the image, and a weight in an area in the upper part of the image is decreased (set to be different). Fig. 7C illustrates a weight table in which a weight in a central part of the image is increased by taking into account a tendency that a main subject is likely to be reflected in the central part of the image, so that it is facilitated to accurately figure out the brightness of the main subject. In other words, the weight in the central part of the image is set to be different from a weight in a peripheral part of the image. Herein, types of the fixed weight tables for changing the weight for each area to evaluate the brightness have been introduced, but these tables may be dynamically switched according to a subject or a shooting condition to evaluate the brightness. In addition, a weight table other than the above may be dynamically generated according to a type or position of the subject in the image to evaluate the brightness.

The signal value indicating the brightness of the image can be calculated based on the image signal value of each area which is obtained from the image as described above and the weight table. Specifically, the signal value of the image signal in each area is multiplied by a weight value in each area which is specified by the weight table, and a multiplication result in each area is added across all areas, so that the brightness Y of the subject can be evaluated (calculated) (S502). The brightness Y obtained through the calculation across all the areas is compared with Yref set as a reference value of the appropriate brightness which is held in the memory 16 in advance, so that the brightness of the subject can be evaluated. That is, when Y is lower than the reference value Yref, it can be evaluated that the brightness of the subject is insufficient, and when Y is larger than the reference value Yref, it can be evaluated that the brightness is excessive.

In view of the above, $\Delta Y$ is calculated as a difference between Y and Yref (S503). At this time, the brightness of the image and the reference value do not need to exactly match, and it is determined that the brightness is in a range of the appropriate brightness (in a predetermined range) when the difference $\Delta Y$ is lower than a predetermined threshold $\theta Bv$. Therefore, when Expression 1 below is satisfied, it is determined that Y is the appropriate brightness (S504).

$$\Delta Y = abs\,(Y - Yref) < \theta Bv \,\cdots\,(1)$$

It is noted that Yref is the brightness set as the reference, and may be, for example, a predetermined percentage of the sum total of the signal values of the image signals. Alternatively, Yref may be a predetermined percentage (for example, 18%) of a maximum of the signal values of the image signals.

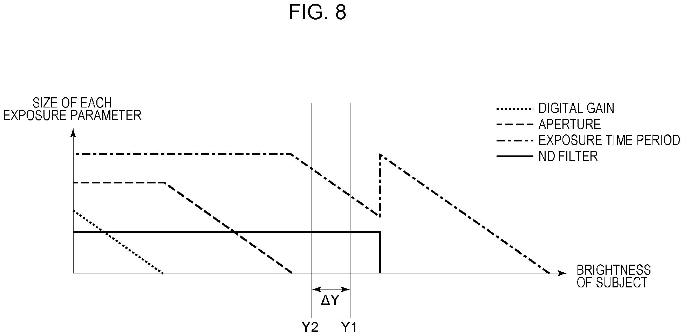

Next, an auto exposure adjustment function (S505) applied when the brightness is deviated from the appropriate brightness (S504: NO) will be described. When the brightness is deviated from the appropriate brightness, by adjusting a parameter related to exposure in a direction in which the brightness is cancelled out by the deviation amount $\Delta Y$, the brightness can be returned to the range of the appropriate brightness. That is, when it is determined that the brightness Y of the image based on the image signal is out of the predetermined range, the parameter related to the exposure is controlled. The parameter related to the exposure includes an aperture, an exposure time period, a digital gain, and the like, and which parameter is to be adjusted is specified by an auto exposure (AE) line chart. Fig. 8 illustrates an example of the AE line chart. In this AE line chart, when the subject moves from a dark side to a bright side, first, the digital gain is set to a minimum to darken, and the aperture is then used to darken. Thereafter, the exposure time period is adjusted to darken. In mid-course, a single-density ND filter is inserted, and by a darkened amount due to the ND filter, the exposure time period is set to brighten. Finally, the exposure time period is set to further darken. In this manner, a sequence of control is specified based on the parameter related to the exposure, and it becomes possible to appropriately control the brightness of the subject by combining parameters related to the exposure. Herein, as an example, a case will be considered where while the brightness of the subject is Y1, it is evaluated that an evaluation result of the brightness is bright by $\Delta Y$, and it is determined that $\Delta Y$ is higher than the predetermined threshold $\theta Bv$. In Fig. 8, at Y1, the brightness is at a level where the exposure time period takes a turn to be shifted. When the exposure time period is shifted to darken by $\Delta Y$, the brightness shifts to Y2. Herein, $\Delta Y = 0$ since the exposure is shifted by $\Delta Y$, so that the brightness falls within the appropriate brightness, and the auto exposure adjustment is stopped. It is noted that $\Delta Y$ does not necessarily need to be exactly set at 0, and the parameter related to the exposure may be controlled such that $\Delta Y$ is set to be lower than the predetermined threshold $\theta Bv$. In this manner, the brightness is evaluated based on the image signal in each area of the image, and by mutually controlling the parameters related to the exposure which are specified in the AE line chart, it is possible to control the subject to be set to the appropriate brightness. It is noted that a function as a control unit configured to control the parameters related to the exposure described above may be realized by the control operation unit 14.

Stress Change of Image Capture Element

As the characteristic of the SPAD sensor, the large current flows due to the avalanche amplification phenomenon according to the input photon, and the photon number can be counted, which has been described above. On the other hand, to generate the avalanche amplification phenomenon, application of a reverse bias voltage exceeding the breakdown voltage is to be performed, and the large current flows upon the application of the large voltage. When use as an image sensor is assumed, shooting action for images at 30 frames or more per second is performed in video shooting, and the large current repeatedly flows through the circuit element of each pixel, so that load is very large. Therefore, due to the repetition of the large currents, a stress of the circuit element may change. When the stress change occurs in the circuit element of each pixel in the SPAD sensor, a dark count rate (DCR) may increase. In view of the above, when the number of occurrences of avalanche amplification in each pixel in the SPAD sensor is cumulatively counted, the DCR generated in each pixel can be roughly predicted. However, when the cumulative value of the number of occurrences of avalanche amplification is held in a sensor in units of pixel, since an amount of data to be stored further increases as the number of pixels on the sensor increases, it is difficult to continue holding the cumulative value in a counter circuit of the sensor.

Calculation of Output Signal and Storage of Cumulative Value

In view of the above, a case will be considered where a signal value of the output signal is obtained by area from the sensed image to be accumulated. The output signal indicates the number of occurrences of avalanche amplification (that is, the pulse number). According to the present embodiment, the output signal and the image signal are distinguished as different signals. The output signal is a signal output from the image capture element 11, and the image signal is a signal that has been subjected to the transformation processes by the signal processing unit 12. The signal value of the output signal may be obtained for each color of the Bayer image, or may also be obtained for each color or each luminance of the YCC or YUV image. The number of divisions for the signal value by area does not necessarily need to be $4 \times 4$, and the signal value may be obtained in the $8 \times 8$ or $16 \times 16$ areas. An example has been illustrated in which the signal value of the image signal is obtained by area based on the auto exposure adjustment function, but the signal value of the image signal by area that is the same as that of the auto exposure adjustment may also be used. In addition, an example has been herein illustrated in which the average value of the signal values of the output signals by area is obtained, but the signal value may also be obtained as a sum total of the signal values of the output signals in the areas.

As described above, the obtained image signal by area is a signal obtained by applying some transformation processes to the output signal (pulse number). Therefore, the signal value of the image signal is different from the number of occurrences of avalanche amplification.

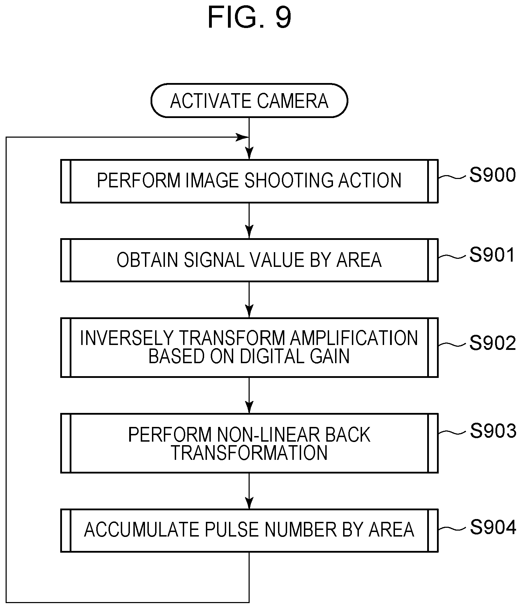

The digital gain and the linear transformation are applied to the output signal in the flow illustrated in Fig. 3, but to calculate the output signal from the image signal, the applied transformations are to be undone. Hereinafter, a flow of processing of calculating the cumulative value of the number of occurrences of avalanche amplification (that is, the signal value of the output signal) from the image signal will be described with reference to a flowchart of Fig. 9.

First, an image is sensed by using the SPAD sensor (S900). A linear transformation and a digital gain are applied to the sensed image (output signal) to obtain an image signal by area (S901). Next, an amplification amount based on the digital gain is inversely transformed for the obtained image signal (S902). Furthermore, the inversely transformed image signal is inversely transformed based on the non-linear characteristic between the pulse number and the image signal in Fig. 4B (S903). It is noted that there may be a case where the output signal from the SPAD sensor is not equivalent to the number of occurrences of avalanche amplification. For example, it is fully conceivable that a signal which is offset with respect to the pulse number in the sensor is output as the output signal. In this case, the signal processing unit 12 can more accurately obtain the number of occurrences of avalanche amplification by performing a subtraction process of a signal value by the offset amount in the sensor in addition to the above-described two inverse transformation processes. In this manner, the number of occurrences of avalanche amplification may be calculated by performing a predetermined transformation including at least one of the inverse transformation and the subtraction process on the image signal. It is noted however that the offset amount in the sensor may be allowed to regard the output signal as the number of occurrences of avalanche amplification as it is. In this case, by storing the output signal as it is before being subjected to the transformation process by the signal processing unit 12 as the cumulative value, the processes in S902 and S903 may be skipped. It is noted that the signal processing unit 12 or the control operation unit 14 realizes a function as a calculation unit configured to calculate the number of occurrences of avalanche amplification in the image capture element 11 based on the image signal. The number of occurrences of avalanche amplification (the output signal, the pulse number) obtained through the inverse transformation (calculation) is accumulated by area and stored in the memory 16 serving as a storage unit while the camera is activated to continue the image shooting action (S904). That is, the cumulative value of the number of occurrences of avalanche amplification which is calculated by the calculation unit (the signal processing unit 12 or the control operation unit 14) is stored in the storage unit (the memory 16).

The memory 16 or the auxiliary storage device which is not illustrated in the drawing functions as a storage unit configured to store the cumulative value of the number of occurrences of avalanche amplification which is calculated by the calculation unit.

Through the calculation of the number of occurrences of avalanche amplification by the calculation unit and the storage for each of the sensed images, the number of occurrences of avalanche amplification can be figured out for each area, and an influence (increase in the DCR) from the stress change of the circuit element can be estimated.

Herein, since the cumulative value may become an astronomical number depending on a brightness of the subject of the camera or an operational period, the cumulative value may be stored in a logarithmic expression as a method of holding the cumulative number of occurrences, or a floating point type notation may be used. The cumulative value may be divided into an exponent part and an integer part to be stored. A value stored as the cumulative value does not necessarily need to be the pulse number itself, and may be another physical quantity with which the pulse number can be calculated. For example, the cumulative value of the image signal for each area may be stored in the memory 16, and at timing at which a reference is made to the stored cumulative value, the cumulative value of the image signal may be converted into the cumulative value of the output signal.

Alternatively, the cumulative value may be stored as a difference value from a value set as a reference (for example, Yref or the like) or a ratio value, or may be stored as a value obtained by subjecting the ratio value to a logarithmic transformation. In this case, conversion into the pulse number is performed by using these physical quantities and the value set as the reference, and a degree of the stress change can be estimated based on the pulse number.

An Ev value representing an absolute luminance in which an Av value, a Tv value, and an Sv value are taken into account in the signal value of the image may be held for each area. In this case, since a $\Delta Bv$ value based on the reference value is calculated by subtracting the cumulative Av value, Tv value, and Sv value from the cumulative Ev value, it becomes possible to estimate the pulse number by using the reference value.

With regard to the accumulation of the pulse number, the pulse number does not necessarily need to be accumulated in all consecutive frames in use such as a monitoring camera in which the shooting action of the fixed subject continues for a long time period, and the pulse number may be calculated and accumulated by area in the image at a certain period interval.

Exposure Control based on Cumulative Value

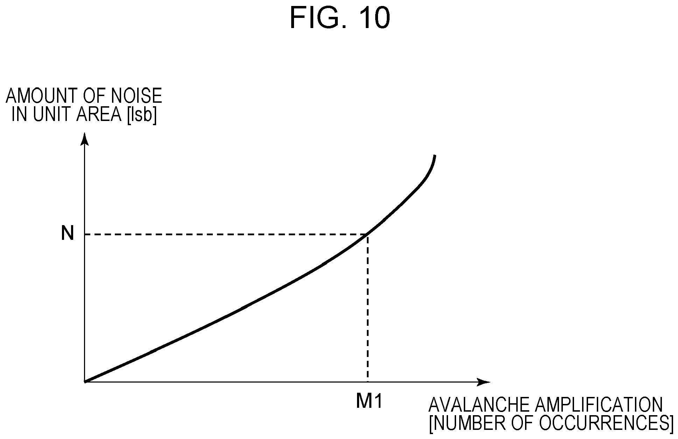

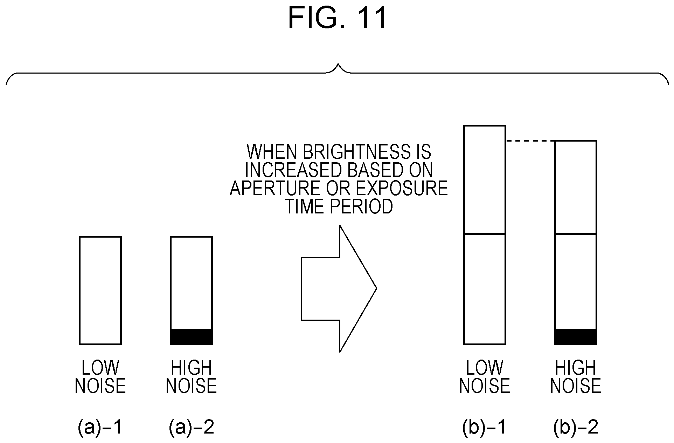

Fig. 10 illustrates a correlational relationship between the number of occurrences of avalanche amplification and the DCR. In Fig. 10, an horizontal axis represents the number of occurrences of avalanche amplification. Herein, the number of occurrences is very large and is assumed on the order of mega or giga. A vertical axis represents an amount of noise due to the dark current per unit area which is generated in an image due to a degradation. When the amount of noise increases, a difference may occur in brightness evaluations based on a change in the exposure. Fig. 11 illustrates two examples in which the same brightness evaluation result is obtained in a case ((a)-1) where the amount of noise is high and a case ((b)-1) where the amount of noise is low. Herein, when a case is considered where the brightness is increased based on the aperture or the exposure time period, since the brightness does not change by the amount of noise in the control based on the aperture or the exposure time period, the brightness increases only by a true brightness of the subject which is obtained through subtraction of the amount of noise. For this reason, in the two examples with the same brightness before the brightness is increased, as illustrated in (a)-2 and (b)-2 in Fig. 11, it is found that the two examples do not result in the same brightness after the change in the exposure.

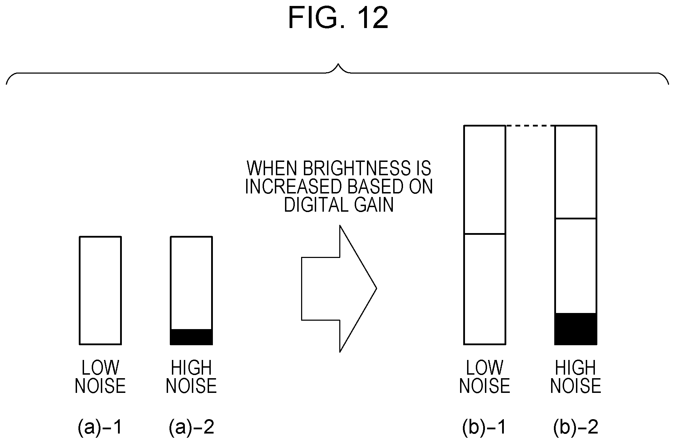

Next, an example is considered in which the exposure is changed based on the digital gain. Fig. 12 illustrates two examples in which the same brightness evaluation result is obtained in a case ((a)-1) where the amount of noise is high and a case ((b)-1) where the amount of noise is low. When the brightness is increased based on the digital gain, since the amplification is digitally applied to the image signal including the noise, the noise is also amplified. As a result, as illustrated in (a)-2 and (b)-2 in Fig. 12, an image quality degrades since the noise is also amplified, but the two example have the same result as the brightness evaluation result. In this manner, with regard to an influence from the degradation based on the number of occurrences of avalanche amplification, different phenomena occur also depending on the parameter related to the exposure which is controlled at the time of the auto exposure adjustment. That is, when the control to generously shift the exposure is performed according to the exposure change based on the aperture or the exposure time period, the exposure is shifted too much at the time of the exposure control based on the digital gain, and a phenomenon occurs in which the exposure becomes unstable. In contrast, when the control to decrease the exposure control amount is performed according to the exposure change based on the digital gain, a phenomenon occurs in which it takes time to reach the appropriate exposure in the aperture or gain area, or the exposure stops short before reaching the appropriate exposure.

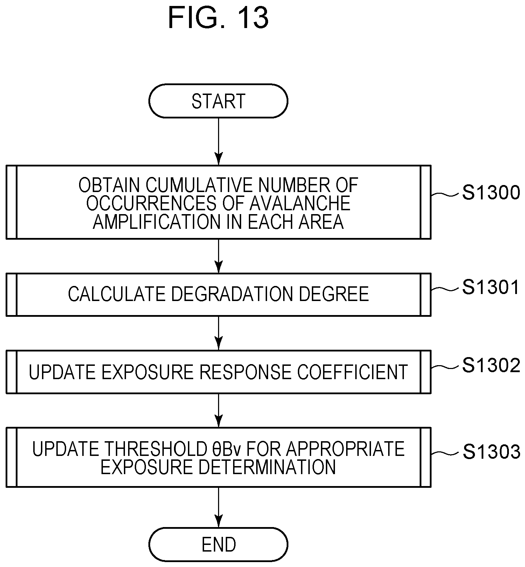

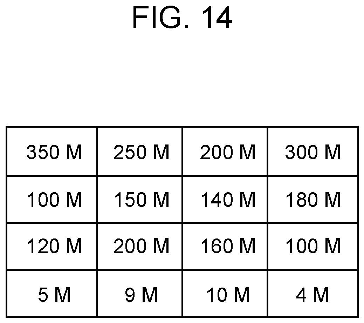

In view of the above, use of the cumulative value of the number of occurrences of avalanche amplification (hereinafter, referred to as the cumulative value) will be considered. Fig. 13 illustrates a flowchart when the cumulative value is used for the exposure control. It is found that the cumulative value has a correlation with a change of the dark current in each area of the SPAD sensor. In view of the above, the cumulative value is obtained by area with reference to the storage unit (the memory 16) (S1300). Fig. 14 illustrates an example of the cumulative value by area. It is noted that M indicates 10^6. When a threshold T at which the change of the dark current begins to become noticeable is 150 M, areas with over 150 M are eight areas out of 16 areas, and the increase in the dark current is noticeable in 50% of areas. In this manner, as an example, a percentage occupied by areas in which the cumulative value becomes equal to or higher than the threshold T at which the change becomes noticeable is calculated (S1301).

The description has been provided where there may be a case where even when the exposure is changed, the brightness does not change as much as the changed exposure amount due to the influence from the noise. Herein, a method of realizing stable exposure control by using the percentage occupied by the areas in which the cumulative value becomes equal to or higher than the threshold T will be described.

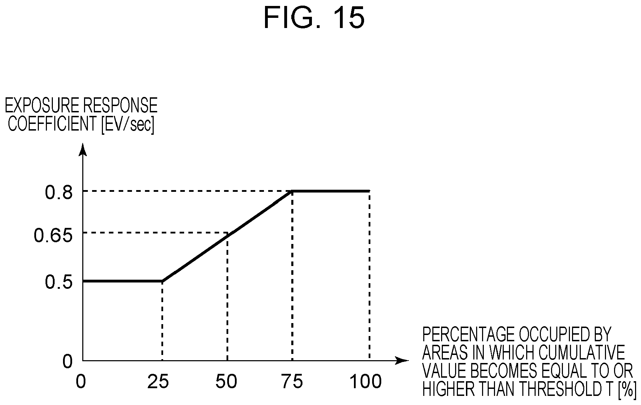

First, in the control based on the aperture and the exposure time period, since a change in light quantity decreases as compared with the control based on the digital gain, it takes time to perform the auto exposure adjustment. In view of the above, a configuration is considered in which by increasing an exposure response coefficient, the time period spent by the auto exposure adjustment returns to an original setting. The exposure response coefficient is a coefficient which specifies a duration of unit time to reach a target exposure difference. How much the exposure is to be shifted during one frame is decided based on this coefficient. Fig. 15 is a relational diagram illustrating a relationship between the percentage occupied by the areas in which the cumulative value becomes equal to or higher than the threshold T and the exposure response coefficient.

When the percentage occupied by the areas in which the cumulative value becomes equal to or higher than the threshold T is small, 0.5 [EV/sec] is set. This indicates a response in which it takes 0.5 seconds to change the exposure by one step in an exposure setting.

On the other hand, when the percentage occupied by the areas in which the cumulative value becomes equal to or higher than the threshold T becomes large, the light quantity change relative to the changed exposure decreases. Therefore, when the exposure response coefficient is increased, the light quantity change can be increased. As illustrated in Fig. 14, when it is assumed here that the percentage occupied by the areas with the notable degradation is 50%, it is found from the relational diagram of Fig. 15 that the exposure response coefficient is 0.65. In this manner, the exposure response coefficient is decided based on the cumulative value of the number of occurrences of avalanche amplification (S1302). According to this, the phenomenon in which it takes time to stop the exposure is avoided.

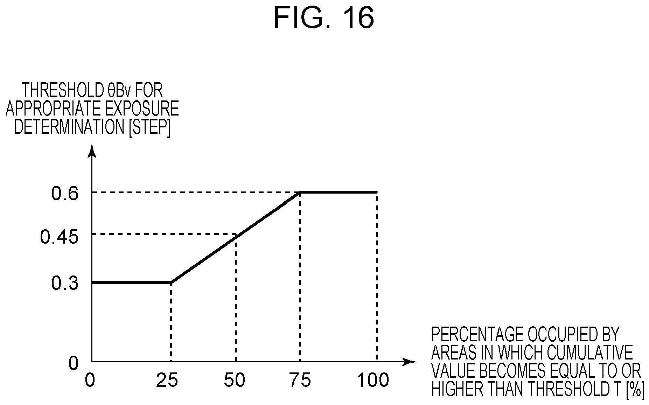

On the other hand, when the amount of exposure shifted at once is increased, since the amount of exposure shifted in one frame increases, a phenomenon may occur in which the exposure passes over the range of the appropriate exposure, and the exposure does not converge. The increase in the dark current has been illustrated in Fig. 10, but the change does not necessarily occur in this manner. That is, the stress change for the input light quantity occurs along with the number of occurrences of avalanche amplification, but a degree of the stress change may vary. As a result, various possibilities are considered with regard to the change of the signal value on the image for the exposure change amount, in which the exposure response may return to the normal exposure response, and it is also conceivable that the exposure response is shifted too fast. In view of the above, the threshold $\theta Bv$ used in the determination on the appropriate exposure is changed in a widening direction. In other words, a range in which the brightness is determined as the appropriate brightness (range in which the parameter related to the exposure is not to be changed) is decided based on the cumulative value of the number of occurrences of avalanche amplification. Specifically, the value of the above-described threshold $\theta Bv$ is increased (range in which the brightness is determined as the appropriate brightness is widened). Furthermore, as derived from Fig. 16, as the percentage occupied by the areas (or the number of the areas) in which the cumulative value becomes equal to or higher than the threshold T increases, the value of $\theta Bv$ is further increased (range in which the brightness is determined as the appropriate brightness is widened). According to this, even when the amount of exposure shifted in one frame increases, the brightness can fall within the appropriate range, and it becomes possible to stably stop the auto exposure adjustment. Fig. 16 illustrates a relationship between the percentage occupied by the areas in which the cumulative value becomes equal to or higher than the threshold T and a threshold (range) for an appropriate exposure determination. When the percentage is low, $\theta Bv = 0.3$ [step]. However, to avoid the unstable exposure as a result of the increase in the response, when the threshold is updated to $\theta Bv = 0.45$ [step] (S1303), the shooting action can be performed with the stable exposure. In this manner, by changing the exposure response coefficient or the threshold (range) for the appropriate exposure determination according to the degradation degree, even when the change of the characteristic of the SPAD sensor progresses, it is possible to stably control the exposure.

In the above description, the control on the exposure using the percentage occupied by the areas in which the number of occurrences of avalanche amplification is equal to or higher than the threshold has been described, but another index may be used. For example, a maximum value of the cumulative value may be used, or a cumulative value of the number of occurrences of avalanche amplification in a particular area such as an image central part may also be used. In other words, the exposure response coefficient or the threshold (range) for the appropriate exposure determination is decided based on the maximum value of the cumulative value of the number of occurrences of avalanche amplification. Alternatively, the exposure response coefficient or the threshold (range) for the appropriate exposure determination is decided based on the cumulative value of the number of occurrences of avalanche amplification in the particular area (for example, the central part or a designated area). The cumulative value of the number of occurrences of avalanche amplification may be stored for each pixel, and the exposure response coefficient or the threshold (range) for the appropriate exposure determination may be decided based on an area ratio of pixels, to an entire area, or a number of pixels in which the cumulative value becomes equal to or higher than the threshold T. The cumulative value may be reset due to a reason such as replacement of the sensor. In this case, the exposure response coefficient can return to the original setting, or the threshold (range) for the appropriate exposure determination can also be decreased.

It is noted that according to the present embodiment, the case has been described where both the exposure response coefficient and the threshold (range) for the appropriate exposure determination are changed based on the cumulative value of the number of occurrences of avalanche amplification, but only one of those may be changed. For example, in the flowchart in Fig. 13, S1302 may be skipped, and only S1303 may be performed. With the process only in S1303, the threshold $\theta Bv$ is changed such that the brightness Y does not erroneously exceed the threshold for the appropriate exposure determination due to the increase in the dark current, and an advantage of stabilizing the AE can be attained.

The same also applies to the relationship between the exposure response coefficient and the percentage occupied by the areas in which the cumulative value becomes equal to or higher than the threshold T. In Fig. 15, the linear relationship has been described as an example, but a non-linear correspondence relationship may be used, or a multidimensional function may also be used. The same also applies to the relationship illustrated in Fig. 16 between the percentage occupied by the areas in which the cumulative value becomes equal to or higher than the threshold T and the threshold (range) for the appropriate exposure determination, but a relationship other than this may also be used. The drawing merely illustrates an example indicating an association with the percentage occupied by the areas in which the cumulative value becomes equal to or higher than the threshold T. Therefore, the drawing does not limit any relationship, either the percentage occupied by the areas in which the cumulative value becomes equal to or higher than the threshold T and the exposure response, or the percentage occupied by the areas in which the cumulative value becomes equal to or higher than the threshold T and the threshold (range) for the appropriate exposure determination.

Other Embodiments

The present invention has been described above in detail by way of embodiments, but the present invention is not limited to these particular embodiments, and various modes in a scope without departing from the gist of this invention are also included in the present invention. Some of the above-described embodiments may be appropriately combined.

The present invention can also be realized by processing in which a program for realizing one or more functions of the above-described embodiments is supplied to a system or an apparatus via a network or a storage medium, and one or more processors in a computer of the system or the apparatus read out and execute the program.

In addition, the present invention can be realized by a circuit (for example, an application specific integrated circuit (ASIC)) configured to realize the one or more functions.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments, but is defined by the scope of the following claims.

**Claims**

1. An image capture apparatus comprising:

an image capture element (11) including an avalanche photodiode configured to photoelectrically convert an optical image;
image processing means (12) configured to generate an image signal based on an output signal from the image capture element (11);
calculation means (12, 14) configured to calculate a number of occurrences of avalanche amplification in the image capture element (11)

based on the image signal;
storage means (16) configured to store a cumulative value of the number of occurrences which is calculated by the calculation means (12, 14); and
control mean (14) configured to control a parameter related to exposure when it is determined that a brightness of an image based on the image signal is out of a predetermined range, wherein the control means (14) is configured to decide the predetermined range based on the cumulative value stored in the storage means (16).

2. The image capture apparatus according to claim 1, wherein the number of occurrences is calculated by performing a predetermined transformation on the image signal.

3. The image capture apparatus according to claim 2, wherein the predetermined transformation includes at least one of an inverse transformation process of a digital gain, an inverse transformation process on an inverse transformation of a linear transformation on a characteristic of the image capture element (11), and a subtraction process for subtraction of a signal value offset by the image capture element (11).

4. The image capture apparatus according to any one of the preceding claims, wherein the number of occurrences is calculated in each of a plurality of areas.

5. The image capture apparatus according to any one of the preceding claims, wherein the cumulative value of the number of occurrences is stored for each of the plurality of areas.

6. The image capture apparatus according to any one of the preceding claims, wherein the control means (14) is configured to

calculate a number of areas or a percentage occupied by areas in which the cumulative value of the number of occurrences becomes equal to or higher than a predetermined threshold, and decide the predetermined range based on the calculated number or percentage.

7. The image capture apparatus according to claim 6, wherein the predetermined range is decided in a manner that the predetermined range is further widened as the number or percentage is higher.

8. The image capture apparatus according to any one of the preceding claims, wherein it is determined whether or not the brightness of the image is out of the predetermined range based on a difference between a reference value and a signal value indicating the brightness of the image that is a signal value based on the image signal.

9. The image capture apparatus according to any one of the preceding claims, wherein the control means (14) is configured to decide an exposure response coefficient based on the cumulative value stored in the storage means (16).

10. The image capture apparatus according to any one of the preceding claims, wherein the predetermined range is decided based on a maximum value of the number of occurrences for each of the plurality of areas.

11. The image capture apparatus according to claim 5, wherein the predetermined range is decided based on a cumulative value in a particular area among cumulative values each of which is the cumulative value of the number of occurrences which is stored for each of the plurality of areas.

12. The image capture apparatus according to any one of the preceding claims, wherein the parameter related to the exposure includes at least any one of an aperture, an exposure time period, and an ND filter.

13. A control method comprising:

generating an image signal based on an output signal from an image capture element (11); calculating a number of occurrences of avalanche amplification in the image capture element (11) based on the image signal; storing a cumulative value of the number of occurrences which is calculated in the calculating; and controlling a parameter related to exposure when it is determined that a brightness of an image based on the image signal is out of a predetermined range, wherein in the controlling, the predetermined range is decided based on the cumulative value stored in the storing.

14. A computer program comprising instructions which, when the program is executed by a computer, cause the computer to execute the control method according to claim 13.

15. A computer-readable storage medium storing the program according to claim 14.

# FIG. 1

# FIG. 2

# FIG. 3

PULSE NUMBER (OUTPUT SIGNAL) ⇒ LINEAR TRANSFORMATION ⇒ DIGITAL GAIN ⇒ IMAGE SIGNAL

# FIG. 4A

PULSE COUNT
NUMBER

PHOTON NUMBER

# FIG. 4B

IMAGE SIGNAL
VALUE

PULSE COUNT
NUMBER

# FIG. 5

ACTIVATE CAMERA

PERFORM IMAGE SHOOTING ACTION — S500

OBTAIN SIGNAL VALUE OF EACH AREA — S501

WEIGHT AND ADD SIGNAL VALUE OF EACH AREA TO CALCULATE Y — S502

CALCULATE $\Delta Y$ — S503

S504

$\Delta Y < \theta Bv?$

YES

NO

CHANGE EXPOSURE BY $\Delta Y$ — S505

# FIG. 6A

# FIG. 6B

| 12000 | 4000 | 3000 | 3000 |
|-------|------|------|------|
| 3000 | 3000 | 3000 | 2500 |
| 700 | 800 | 650 | 300 |
| 600 | 600 | 600 | 500 |

# FIG. 7A

| 1 | 1 | 1 | 1 |
|---|---|---|---|
| 1 | 1 | 1 | 1 |
| 1 | 1 | 1 | 1 |
| 1 | 1 | 1 | 1 |

# FIG. 7B

| 1 | 1 | 1 | 1 |
|---|---|---|---|
| 2 | 2 | 2 | 2 |
| 2 | 2 | 2 | 2 |
| 2 | 2 | 2 | 2 |

# FIG. 7C

| 1 | 3 | 3 | 1 |
|---|---|---|---|
| 3 | 5 | 5 | 3 |
| 3 | 5 | 5 | 3 |
| 1 | 3 | 3 | 1 |

FIG. 8

# FIG. 9

```
                    ┌──────────────────────┐
                    │   ACTIVATE CAMERA    │
                    └──────────┬───────────┘
      ┌────────────────────────┤
      │      ┌─────────────────▼─────────────────┐
      │      │  PERFORM IMAGE SHOOTING ACTION    ├──── S900
      │      └─────────────────┬─────────────────┘
      │      ┌─────────────────▼─────────────────┐
      │      │    OBTAIN SIGNAL VALUE BY AREA    ├──── S901
      │      └─────────────────┬─────────────────┘
      │      ┌─────────────────▼─────────────────┐
      │      │ INVERSELY TRANSFORM AMPLIFICATION ├──── S902
      │      │      BASED ON DIGITAL GAIN        │
      │      └─────────────────┬─────────────────┘
      │      ┌─────────────────▼─────────────────┐
      │      │    PERFORM NON-LINEAR BACK        ├──── S903
      │      │       TRANSFORMATION              │
      │      └─────────────────┬─────────────────┘
      │      ┌─────────────────▼─────────────────┐
      │      │  ACCUMULATE PULSE NUMBER BY AREA  ├──── S904
      │      └─────────────────┬─────────────────┘
      └────────────────────────┘
```

# FIG. 10

AMOUNT OF NOISE
IN UNIT AREA [lsb]

N

M1

AVALANCHE AMPLIFICATION
[NUMBER OF OCCURRENCES]

# FIG. 11

WHEN BRIGHTNESS IS
INCREASED BASED ON
APERTURE OR EXPOSURE
TIME PERIOD

LOW
NOISE

HIGH
NOISE

(a)-1

(a)-2

LOW
NOISE

HIGH
NOISE

(b)-1

(b)-2

# FIG. 12

WHEN BRIGHTNESS IS
INCREASED BASED ON
DIGITAL GAIN

LOW
NOISE

HIGH
NOISE

(a)-1

(a)-2

LOW
NOISE

HIGH
NOISE

(b)-1

(b)-2

# FIG. 13

START

OBTAIN CUMULATIVE NUMBER OF OCCURRENCES OF AVALANCHE AMPLIFICATION IN EACH AREA — S1300

CALCULATE DEGRADATION DEGREE — S1301

UPDATE EXPOSURE RESPONSE COEFFICIENT — S1302

UPDATE THRESHOLD θBv FOR APPROPRIATE EXPOSURE DETERMINATION — S1303

END

FIG. 14

| 350 M | 250 M | 200 M | 300 M |
|-------|-------|-------|-------|
| 100 M | 150 M | 140 M | 180 M |
| 120 M | 200 M | 160 M | 100 M |
| 5 M | 9 M | 10 M | 4 M |

# FIG. 15

EXPOSURE RESPONSE COEFFICIENT [EV/sec]

0.8

0.65

0.5

0

0    25    50    75    100

PERCENTAGE OCCUPIED BY AREAS IN WHICH CUMULATIVE VALUE BECOMES EQUAL TO OR HIGHER THAN THRESHOLD T [%]

# FIG. 16

THRESHOLD θBv FOR APPROPRIATE EXPOSURE DETERMINATION [STEP]

0.6

0.45

0.3

0

0    25    50    75    100

PERCENTAGE OCCUPIED BY AREAS IN WHICH CUMULATIVE VALUE BECOMES EQUAL TO OR HIGHER THAN THRESHOLD T [%]

Europäisches
Patentamt

European
Patent Office

Office européen
des brevets

# EUROPEAN SEARCH REPORT

Application Number

EP 24 18 9852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/304745 A1 (SATO YUKO [JP]) 24 September 2020 (2020-09-24) | 1-5,8-15 | INV. H04N23/71 |
| A | * paragraph [0027] - paragraph [0055] * <br> * pages 1-3B * | 6,7 | H04N23/72 <br> H04N23/75 <br> H04N25/706 |
| Y | US 2022/191424 A1 (YAMADA SHOTA [JP] ET AL) 16 June 2022 (2022-06-16) <br> * paragraph [0009] - paragraph [0010] * <br> * paragraph [0169] - paragraph [0172] * <br> * paragraph [0214] * <br> * figures 15,18B * | 1-5,8-15 | H04N23/73 <br> H04N23/76 <br> H04N25/63 <br> H04N25/65 <br> H04N25/771 <br> H04N25/773 |
| Y | WO 2022/158379 A1 (CANON KK [JP]) 28 July 2022 (2022-07-28) <br> * paragraph [0240] * <br> * paragraph [0284] - paragraph [0288]; figures 1,27,42 * <br> & US 2023/369373 A1 (IWATA JUNJI [JP] ET AL) 16 November 2023 (2023-11-16) <br> *family member used as a translation* | 1-5,8-15 | |

TECHNICAL FIELDS SEARCHED (IPC)

H04N

The present search report has been drawn up for all claims

| Place of search | Date of completion of the search | Examiner |
|---|---|---|
| The Hague | 19 November 2024 | Rocca, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9852

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | | Publication date |
|---|---|---|---|---|
| US 2020304745 A1 | 24-09-2020 | JP | 7256661 B2 | 12-04-2023 |
| | | JP | 2020155886 A | 24-09-2020 |
| | | US | 2020304745 A1 | 24-09-2020 |
| US 2022191424 A1 | 16-06-2022 | CN | 114270807 A | 01-04-2022 |
| | | JP | 7535704 B2 | 19-08-2024 |
| | | JP | WO2021044771 A1 | 11-03-2021 |
| | | US | 2022191424 A1 | 16-06-2022 |
| | | WO | 2021044771 A1 | 11-03-2021 |
| WO 2022158379 A1 | 28-07-2022 | US | 2023369373 A1 | 16-11-2023 |
| | | WO | 2022158379 A1 | 28-07-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. ZHANG**. SPAD requirements from consumer electronics to automotive. *Int. SPAD Sensor Workshop*, 2022